# EUROPÄISCHE PATENTSCHRIFT

(11) **EP 3 201 544 B1**
(45) Veröffentlichungstag und Bekanntmachung des Hinweises auf die Patenterteilung: **06.02.2019**
(21) Anmeldenummer: 15778242.6
(22) Anmeldetag: 30.09.2015
(51) Int. Cl.: F25D 23/02, F25D 23/04, F25D 17/04

(54) **HAUSHALTSKÄLTEGERÄT MIT EINEM FRISCHHALTEBEHÄLTER**
DOMESTIC REFRIGERATOR WITH A FRESHNESS-PRESERVING CONTAINER
RÉFRIGÉRATEUR DOMESTIQUE POURVU D'UN RÉCIPIENT DE CONSERVATION

(30) Priorität: 02.10.2014 DE 102014219999
(43) Veröffentlichungstag der Anmeldung: 09.08.2017
(73) Patentinhaber: BSH Hausgeräte GmbH, 81739 München (DE)
(72) Erfinder: BENITSCH, Roland, 89564 Nattheim (DE); FINK, Jürgen, 89547 Gerstetten (DE); PFISTER, Bernd, 89079 Ulm (DE)
(86) Internationale Anmeldenummer: PCT/EP2015/072576
(87) Internationale Veröffentlichungsnummer: WO 2016/050852

(56) Entgegenhaltungen:
- WO-A2-2011/072353
- DE-A1- 3 212 753
- JP-A- 2005 055 031
- US-A1- 2014 028 166

## Beschreibung

Die Erfindung betrifft ein Haushaltskältegerät mit einem Frischhaltebehälter.

Aus dem Stand der Technik sind Frischhaltebehälter bekannt, bei welchen eingebrachte Lebensmittel abhängig von einer Stellung des Deckels relativ zur Schale mit einem unterschiedlichen Feuchtegehalt beaufschlagt werden können. Derartige Frischhaltebehälter sind beispielsweise aus der WO 2011/026749 A2 oder der DE 40 40 341 C2 bekannt.

Darüber hinaus sind jedoch auch Frischhaltebehälter zum Einsatz in einen Aufnahmeraum eines Haushaltskältegeräts bekannt, bei welchen mit einer elektrisch arbeitenden Pumpe ein Unterdruck in dem Frischhaltebehälter erzeugt werden kann. Diese Ausgestaltungen sind sehr teuer und darüber hinaus auch bauraumintensiv, da für eine derartige elektrisch arbeitende Pumpe entsprechender Platz benötigt wird. Darüber hinaus sind diese elektrischen Pumpen im Umgebungsbereich im Haushaltskältegerät relativ funktionsanfällig oder aber müssen außerhalb des Aufnahmeraums in einem möglichst geringen Temperaturschwankungen ausgesetzten Bereich angeordnet werden, was jedoch wiederum eine umfängliche Verkabelung und Verbindung mit dem Frischhaltebehälter erfordert, was wiederum zu einem zumindest erhöhten Montageaufwand führt.

Aus der WO 2011/072353 A2 ist ein Frischhaltebehälter für Lebensmittel bekannt. Aus der JP 2005 055031 A und der DE 32 13 753 A1 sind Haushaltskältegeräte mit Frischhaltebehältern bekannt.

Es ist Aufgabe der vorliegenden Erfindung, ein Haushaltskältegerät zu schaffen, bei welchem die Erzeugung eines Unterdrucks in dem Frischhaltebehälter einfacher erfolgen kann.

Diese Aufgabe wird durch ein Haushaltskältegerät gemäß den unabhängigen Ansprüchen gelöst.

Ein erfindungsgemäßes Haushaltskältegerät weist einen Aufnahmeraum für Lebensmittel auf, in dem ein Frischhaltebehälter angeordnet ist. Der Frischhaltebehälter für Lebensmittel umfasst eine Schale und einen abdichtend auf der Schale aufsetzbaren Deckel. Ein wesentlicher Gedanke der Erfindung ist darin zu sehen, dass der Frischhaltebehälter eine mechanisch arbeitende Unterdruckerzeugungseinheit aufweist, mit welcher in dem Frischhaltebehälter ein gegenüber der Umgebung außerhalb des Frischhaltebehälters reduzierter Luftdruck einstellbar ist. Die Unterdruckerzeugungseinheit weist zumindest ein Betätigungselement auf, welches relativ zum Frischhaltebehälter mechanisch bewegbar und somit insbesondere nur mechanisch betätigbar ist, und wobei abhängig von der Bewegung dieses Betätigungselements Luft aus dem Frischhaltebehälter zur Einstellung des reduzierten Luftdrucks absaugbar ist. Durch eine derartige Ausgestaltung eines Frischhaltebehälters mit einer rein und ausschließlich mechanisch arbeitenden Unterdruckerzeugungseinheit ist der Aufbau wesentlich vereinfacht und dennoch eine hochfunktionelle Ausgestaltung ermöglicht. Es kann in dem Zusammenhang ein kompakterer Aufbau erreicht werden. Eine derartig ausschließlich mechanisch arbeitende Unterdruckerzeugungseinheit ist auch robuster gegenüber den Umgebungsbedingungen in einem Haushaltskältegerät, benötigt keine elektrische Verkabelung und keine elektrische Energieversorgung.

Es ist die Schale des Frischhaltebehälters relativ zu dem Aufnahmeraum im in dem Aufnahmeraum gelagerten Zustand verschiebbar, und die Unterdruckerzeugungseinheit ist derart mit der Schale gekoppelt, dass abhängig von der Bewegung der Schale das Betätigungselement der Unterdruckerzeugungseinheit automatisch betätigt ist, insbesondere ausschließlich mechanisch betätigt ist. Durch diese Ausgestaltung wird quasi ein Automatismus zur Unterdruckerzeugung durch die Bewegung einer Komponente des Frischhaltebehälters, nämlich der Schale selbst, erzeugt, ohne dass ein Nutzer das Betätigungselement direkt greifen und bewegen müsste. Dadurch kann diese Unterdruckerzeugung zur bedarfsgerechten Lagerung der Lebensmittel nicht vergessen werden und weist diesbezüglich somit entsprechende Vorteile im Vergleich zu Ausführungen auf, bei denen das Betätigungselement aktiv durch einen Nutzer selbst direkt betätigt und verschoben werden muss, um den Unterdruck erzeugen zu können.

Es ist vorgesehen, dass ein Kolben der Unterdruckerzeugungseinheit ortsfest in dem Aufnahmeraum angeordnet ist und ein den Kolben aufnehmendes Kolbengehäuse der Unterdruckerzeugungseinheit ortsfest mit der Schale verbunden ist, wobei abhängig von der Bewegung der Schale das Kolbengehäuse relativ zum Kolben verschiebbar ist und dadurch Luft aus dem Frischhaltebehälter absaugbar oder einblasbar ist. Dies ist eine sehr vorteilhafte Spezifikation, da somit quasi durch die ortsfeste Lagerung des Kolbens dieser sich nicht verkippen oder verspreizen kann und das größere und stabilere Kolbengehäuse mit der Schale verbunden ist und mitbewegt wird, sodass auch hier die Positionsfixierung und Relativverschiebung zum Kolben sehr bedarfsgerecht ermöglicht sind.
Indem die Unterdruckerzeugungseinheit auch ein bewegbares mechanisches Betätigungselement aufweist, ist sie sehr einfach zu bedienen und darüber hinaus auch dauerhaft funktionsfähig.

Vorzugsweise ist vorgesehen, dass die Unterdruckerzeugungseinheit einen linear verschiebbaren Kolben als Betätigungselement aufweist. Dies ist dahingehend vorteilhaft, dass durch eine derartige geradlinige Verschiebebewegung ein einfacher Betätigungsweg des Betätigungselements vorgegeben ist und dadurch auch ein unerwünschtes Verklemmen oder Verspreizen vermieden ist. Die Absaugung des Luftvolumens aus dem Frischhaltebehälter zur Erzeugung eines reduzierten Luftdrucks ist dadurch auch sehr gleichmäßig und kontinuierlich möglich. Durch die Ausgestaltung des Betätigungselements als Kolben ist darüber hinaus auch ein Schieber geschaffen, der relativ schnell ein relativ großes Volumen aus dem Frischhaltebehälter zur Absaugung ermöglicht. Darüber hinaus ist ein derartiger Kolben auch ein mechanisch stabiles Bauteil, welches den auftretenden Kräften und Belastungen dauerhaft standhält und auch bei stärker reduzierter Druckeinstellung in dem Frischhaltebehälter diesen Anforderungen standhält und keine Leckagen zulässt.

Vorzugsweise ist vorgesehen, dass die Unterdruckerzeugungseinheit als mechanisch arbeitende Pumpe ausgebildet ist, die insbesondere ausschließlich mechanisch arbeitet, und ein als Kolben ausgebildetes Betätigungselement aufweist, wobei dieser Kolben in einem als Kolbengehäuse ausgebildeten Betätigungselementgehäuse der Pumpe verschiebbar gelagert ist. Abhängig von der Verschiebung des Kolbens ist dann die Luft aus dem Frischhaltebehälter absaugbar, um dort den reduzierten Luftdruck einzustellen. Dies ist eine sehr bevorzugte Ausführung, da durch eine derartig ausschließlich mechanisch arbeitende Pumpe, insbesondere im Hinblick auf das Wirkprinzip einer Luftpumpe, ein sehr einfacher und dennoch hochfunktioneller Aufbau realisiert ist. Die oben genannten Vorteile treten bei dieser Ausgestaltung im besonderen Maße hervor. Durch diese Ausgestaltung ist der Kolben auch geschützt und umgeben und durch das Kolbengehäuse auch passgenau und zielsicher führbar, sodass insbesondere die lineare Verschiebung des Kolbens besonders vorteilhaft erreicht ist. Darüber hinaus lässt sich durch diese Ausgestaltung mit einem Kolbengehäuse auch die gewünschte Luftmenge schnell und umfänglich absaugen, und durch die spezifische Führung des Kolbens in dem Kolbengehäuse treten auch bei umfänglicher Luftabsaugung aus dem Frischhaltebehälter keine Leckagen auf.

Vorzugsweise ist vorgesehen, dass die Unterdruckerzeugungseinheit in den Frischhaltebehälter integriert ist. Durch diese Ausgestaltung kann quasi somit ein sehr kompaktes positionstoleranzfreies Modul geschaffen werden. Die Kopplung ist dadurch ebenfalls bereits integriert, und es treten äußerst kurze Wege zwischen der Unterdruckerzeugungseinheit und dem Frischhaltebehälter auf, sodass das Absaugen besonders unverzüglich und somit direkt erfolgen kann.

Es kann auch vorgesehen sein, dass die Unterdruckerzeugungseinheit von dem Frischhaltebehälter zerstörungsfrei lösbar abnehmbar und wieder anbringbar ist. Dies ist dahingehend vorteilhaft, dass zu Montagezwecken oder Wartungsarbeiten die Zugänglichkeit zu der Schale und/oder dem Deckel einerseits und zu der Unterdruckerzeugungseinheit andererseits verbessert ist. Insbesondere kann auch zu Reinigungszwecken der genannten Komponenten dadurch ein Vorteil erzielt werden.

In besonders vorteilhafter Weise ist vorgesehen, dass die Unterdruckerzeugungseinheit in einer Nische des Frischhaltebehälters aufgenommen beziehungsweise angeordnet ist. Dadurch kann ein sehr kompakter Aufbau dieses Moduls erreicht werden und die Unterdruckerzeugungseinheit auch im gewissen Maße geschützt angeordnet werden. Insbesondere ist vorgesehen, dass die Unterdruckerzeugungseinheit in dieser Nische bezüglich der Ausmaße des Frischhaltebehälters überstandsfrei aufgenommen beziehungsweise angeordnet ist. Dies bedeutet somit, dass die Nische so dimensioniert ist, dass im darin angeordneten Zustand der Unterdruckerzeugungseinheit diese Unterdruckerzeugungseinheit nicht über die Ausmaße der Nische und somit auch des Frischhaltebehälters übersteht und somit quasi versenkt angeordnet ist. Vorzugsweise ist diese Nische in der Schale des Frischhaltebehälters ausgebildet.

Bei einer vorteilhaften Ausführung ist die Unterdruckerzeugungseinheit unterhalb der Schale angeordnet. Sie kann in dem Zusammenhang beispielsweise an einem Boden der Schale angeordnet sein.

Es kann auch vorgesehen sein, dass die Unterdruckerzeugungseinheit in horizontaler Richtung betrachtet seitlich neben einer Seitenwand der Schale angeordnet ist, insbesondere an dieser Seitenwand anliegend angeordnet ist.

Durch diese alternativen Ausführungen kann bedarfsgerecht ein individueller Frischhaltebehälter geschaffen werden.

Vorzugsweise ist vorgesehen, dass bei einem Ausführungsbeispiel das Betätigungselement frontseitig des Frischhaltebehälters zugänglich ist und frei liegt und somit quasi dieses Betätigungselement über eine Front des Frischhaltebehälters betätigt werden kann.

Es kann in dem Zusammenhang vorgesehen sein, dass bei einem Ausführungsbeispiel eines Frischhaltebehälters dieses Betätigungselement als ein von einem Nutzer greifbarer Schieber angeordnet ist, wobei abhängig von einem durch einen Nutzer initiierten Bewegen des Betätigungselements dann automatisch Luft aus dem Frischhaltebehälter und somit aus dem durch die Schale und den darauf dichtend angeordneten Deckel begrenzten Volumen absaugbar ist. Wird dieses Betätigungselement dann durch einen Nutzer geführt wiederum in die entgegengesetzte Richtung betätigt, so wird der erzeugte Unterdruck beziehungsweise der reduzierte Luftdruck wieder aufgehoben und somit dann quasi Luft in den Frischhaltebehälter eingebracht. Auch dies erfolgt ausschließlich durch die mechanisch arbeitende Unterdruckerzeugungseinheit.

Es kann auch vorgesehen sein, dass die Unterdruckerzeugungseinheit in einem gewissen Abstand und somit berührungslos oder kontaktfrei mit der Schale und/oder dem Deckel angeordnet ist und über eine, insbesondere flexible, Luftleitung mit einer Öffnung, insbesondere in der Schale, verbunden ist, um dann die Absaugung der Luft zu ermöglichen. Diese Ausführung ist dann vorteilhaft, wenn das Volumen des Frischhaltebehälters zur Aufnahme der Lebensmittel unverändert bleiben soll und in dem Zusammenhang beispielsweise keine Nische, wie sie oben genannt und erläutert wurde, vorhanden sein soll.

Auch dann, wenn bei einer Verwendung eines derartigen Frischhaltebehälters in einem Haushaltskältegerät ein unmittelbar angrenzender und kontaktierender Verbau der Unterdruckerzeugungseinheit an der Schale und/oder dem Deckel aufgrund des Bauraums nicht möglich ist, ist eine derartige Ausgestaltung mit einer längeren Luftleitung vorteilhaft.

Vorzugsweise ist vorgesehen, dass der Frischhaltebehälter eine Anzeigeeinheit aufweist, die an der Schale und/oder dem Deckel angeordnet ist und welche zur Anzeige des Luftdrucks in dem Frischhaltebehälter ausgebildet ist. Die Anzeige kann hier beispielsweise durch ortsfest angeordnete und unveränderliche Symbole, die beispielsweise als Bedruckung aufgebracht sind, erfolgen. Abhängig von der jeweiligen Stellung des Betätigungselements relativ zu diesen ortsfest angebrachten Elementen beziehungsweise Symbolen kann dann der jeweils eingestellte Luftdruck im Frischhaltebehälter erkannt werden. Es kann jedoch auch eine elektronische Anzeige erfolgen, bei welcher der Luftdruck, beispielsweise mittels eines Sensors, erfasst wird und entsprechend dann auf einem Display der Anzeigeeinheit angezeigt wird.

In einer vorteilhaften Ausführung ist der Frischhaltebehälter zerstörungsfrei entnehmbar in dem Aufnahmeraum angeordnet.

Es kann vorgesehen sein, dass der Deckel des Frischhaltebehälters als komplettes Teil von der Schale abgehoben werden kann oder nur ein Teilbereich des Deckels, beispielsweise als Klappe, ausgebildet ist, welche dann relativ zur Schale bewegt werden kann. In vorteilhafter Weise ist vorgesehen, dass zur dichtenden Aufsetzung des Deckels auf die Schale zusätzliche Verbindungselemente vorgesehen sind, beispielsweise Rastelemente, um den mechanisch stabilen und dichtenden Sitz des Deckels auf der Schale zu begünstigen. Vorzugsweise ist zumindest die Schale aus einem dünnwandigen und/oder transparenten Kunststoffmaterial ausgebildet.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts;
- Fig. 2: eine perspektivische Darstellung eines Ausführungsbeispiels eines Frischhaltebehälters;
- Fig. 3: eine perspektivische Darstellung eines weiteren Ausführungsbeispiels eines Frischhaltebehälters;
- Fig. 4: eine perspektivische Schnittdarstellung eines Ausführungsbeispiels eines erfindungsgemäßen Frischhaltebehälters mit abgenommener Unterdruckerzeugungseinheit;
- Fig. 5: eine beispielhafte Darstellung einer Unterdruckerzeugungseinheit zur Anbringung an dem Frischhaltebehälter gemäß Fig. 4, bei welcher die Unterdruckerzeugungseinheit in einer ersten Betriebsstellung gezeigt ist;
- Fig. 6: eine Darstellung der Unterdruckerzeugungseinheit gemäß Fig. 5 in einer zu Fig. 5 unterschiedlichen zweiten Betriebsstellung;
- Fig. 7: eine perspektivische Darstellung eines weiteren Ausführungsbeispiels eines Frischhaltebehälters; und
- Fig. 8: eine schematische Vertikalschnittdarstellung durch ein weiteres Ausführungsbeispiel eines Haushaltskältegeräts.

In den Figuren werden gleiche oder funktionsgleiche Elemente mit den gleichen Bezugszeichen versehen.

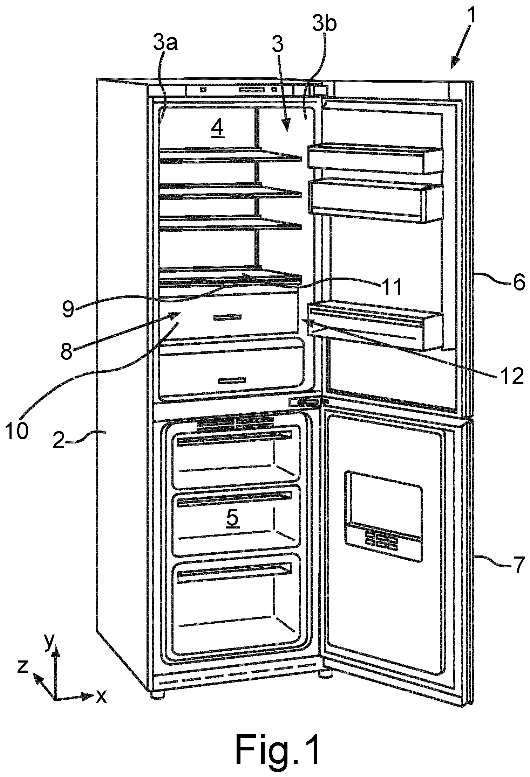

In Fig. 1 ist in einer beispielhaften Darstellung ein Haushaltskältegerät 1 gezeigt, welches als Kühl-Gefrier-Kombigerät ausgebildet ist. Das Haushaltskältegerät 1 umfasst einen Korpus 2 mit einem Innenbehälter 3. Der Innenbehälter 3 begrenzt mit seinen Wänden einen ersten Innenraum beziehungsweise Aufnahmeraum 4, der ein Kühlraum ist, und einen beispielhaft darunter angeordneten, davon separierten zweiten Innenraum beziehungsweise Aufnahmeraum 5, der ein Gefrierraum ist. Der Aufnahmeraum 4 dient im Allgemeinen zum frostfreien Kühlen von Kühlgut, vorzugsweise bei Temperaturen zwischen +4 °C und +8 °C. Der Aufnahmeraum 4 kann jedoch auch als Null-Grad-Fach, insbesondere zum Frischhalten von Obst oder Gemüse, ausgebildet sein. Der Aufnahmeraum 4 ist bei geöffneter Tür 6, die frontseitig den Aufnahmeraum 4 verschließt, zugänglich.

Der weitere Aufnahmeraum 5 dient im Allgemeinen zum Tiefgefrieren von Gefriergut, bei beispielsweise -18 °C. Der Aufnahmeraum 5 ist bei geöffneter Gefrierraumtür 7 zugänglich.

In dem oberen Aufnahmeraum 4 ist ein Kühlgut- beziehungsweise Frischhaltebehälter 8 ausziehbar gelagert, der einen Deckel 9 und eine Schublade bzw. Schale 10 aufweist. Über dem Deckel 9 kann, wie dargestellt, eine zusätzliche Abdeckung 11 beispielsweise in Form einer Trennwand, beispielsweise eines Glasfachbodens, angeordnet sein.

Der Innenbehälter 3 weist unter anderem zwei gegenüberliegende vertikale Seitenwände 3a und 3b auf.

Zumindest durch die Abdeckung 11 ist der Frischhaltebehälter 8 von dem verbleibenden restlichen Teilvolumen des Aufnahmeraums 4 separiert. Der Frischhaltebehälter 8 ist zur Aufnahme von Lebensmitteln ausgebildet und umfasst eine ausschließlich mechanisch arbeitende Unterdruckerzeugungseinheit 12, wie sie nachfolgend anhand spezifischer Ausführungsbeispiele erläutert wird. Mittels der Unterdruckerzeugungseinheit 12 ist ein gegenüber der Umgebung außerhalb des Frischhaltebehälters 8 und somit beispielsweise auch dem Aufnahmeraum 4 reduzierter Luftdruck einstellbar. Die Unterdruckerzeugungseinheit 12 umfasst dazu ein Betätigungselement, welches relativ zum Frischhaltebehälter 8 bewegbar ist und wobei abhängig von der Bewegung des Betätigungselements Luft aus dem Frischhaltebehälter 8 und somit aus dem Volumen, welches durch die Schale 10 und den Deckel 9 begrenzt wird, absaugbar ist.

Der Frischhaltebehälter 8 kann zerstörungsfrei lösbar aus dem Aufnahmeraum 4 entnommen werden. Auch im eingebrachten Zustand in dem Aufnahmeraum 4 ist vorgesehen, dass die Schale 10 in Tiefenrichtung und somit in z-Richtung im noch im Aufnahmeraum 4 gelagerten Zustand hin- und hergeschoben werden kann, um in das Innere der Schale 10 gelangen zu können.

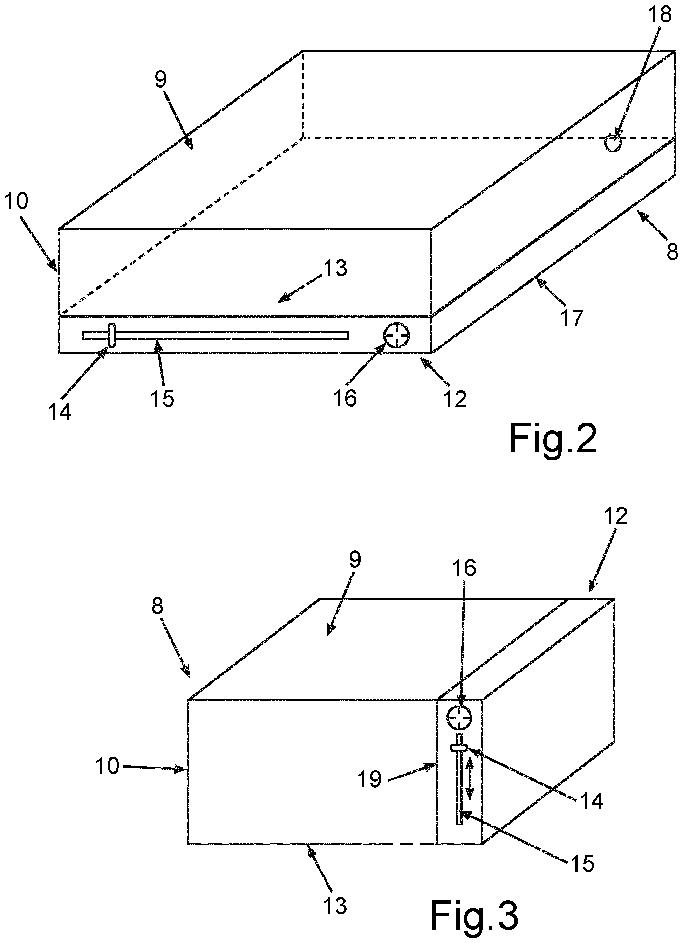

In Fig. 2 ist in einer perspektivischen Darstellung ein von der Erfindung bezüglich der nutzerdirekten Betätigung des Betätigungselements nicht umfasstes Ausführungsbeispiel eines Frischhaltebehälters 8 gezeigt. Bei dieser Ausgestaltung ist vorgesehen, dass die Unterdruckerzeugungseinheit 12 unterhalb der Schale 10 und in dem Zusammenhang an einen Boden 13 der Schale 10 angrenzend angeordnet ist. Ein als Schieber ausgebildetes Betätigungselement 14 ist frontseitig zugänglich und kann durch einen Nutzer gegriffen und entlang einer Verschiebekulisse 15 horizontal und geradlinig verschoben werden. Durch diese nutzerinitiierte und manuell durchgeführte Verschiebebewegung des Betätigungselements 14 wird durch die mechanisch arbeitende Unterdruckerzeugungseinheit 12 Luft aus dem Frischhaltebehälter 8 abgesaugt und somit darin ein reduzierter Luftdruck erzeugt. Wird das Betätigungselement 14 dann wiederum in die entgegengesetzte Richtung verschoben, so wird Luft in das Volumen des Frischhaltebehälters 8 eingebracht und der reduzierte Luftdruck wieder erhöht.

Darüber hinaus ist vorgesehen, dass der Frischhaltebehälter 8 eine Anzeigeeinheit 16 aufweist, durch welche der in dem Frischhaltebehälter 8 durch die Unterdruckerzeugungseinheit 12 erzeugte Luftdruck anzeigbar ist. Dies kann symbolisch oder wertmäßig erfolgen.

Bei dem Ausführungsbeispiel in Fig. 1 ist insbesondere vorgesehen, dass das Betätigungselement 14 einen Kolben aufweist beziehungsweise ein Kolben ist, der in einem in Fig. 2 nicht erkennbaren und in dem der Unterdruckerzeugungseinheit 12 zugehörigen Gehäuse angeordneten Betätigungselementgehäuse 17, welches hier ein Kolbengehäuse ist, verschiebbar gelagert ist. Dieses Betätigungselementgehäuse 17 weist strömungstechnisch eine Verbindung mit dem Inneren des Frischhaltebehälters 8, welches durch die Schale 10 und den Deckel 9 begrenzt ist, auf, wobei hier eine Öffnung 18 vorgesehen ist. Die Unterdruckerzeugungseinheit 12 arbeitet nach dem Prinzip einer Luftpumpe.

Vorzugsweise ist vorgesehen, dass der Deckel 9 in seinem auf die Schale 10 aufgesetzten Zustand dichtend angeordnet ist und insbesondere zusätzlich mit Befestigungselementen, beispielsweise Rastelementen, mit der Schale 10 verbunden ist.

In Fig. 3 ist in einer perspektivischen Darstellung ein weiteres, von der Erfindung bezüglich der nutzerdirekten Betätigung des Betätigungselements nicht umfasstes Ausführungsbeispiel des Frischhaltebehälters 8 gezeigt. Im Unterschied zur Darstellung gemäß Fig. 2 ist hier vorgesehen, dass die Unterdruckerzeugungseinheit 12 hier nicht unterhalb des Bodens 13 angeordnet ist, sondern benachbart und angrenzend beziehungsweise anliegend an eine vertikale Seitenwand 19 der Schale 10 angeordnet ist.

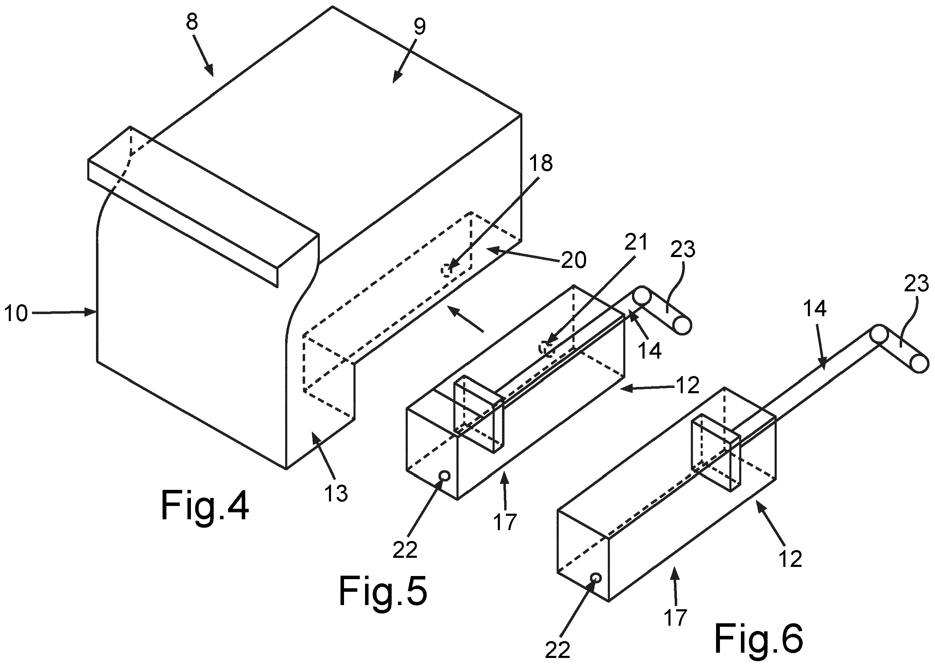

In Fig. 4 ist ein Ausführungsbeispiel gezeigt, wobei hier in einer perspektivischen Schnittdarstellung zu erkennen ist, dass in dem Boden 13 der Schale 10 eine Einbuchtung beziehungsweise Nische 20 ausgebildet ist. In dieser kann die in Fig. 5 in einer ersten Betriebsstellung beispielhaft gezeigte Unterdruckerzeugungseinheit 12 passgenau eingesetzt und mechanisch befestigt werden. Die Unterdruckerzeugungseinheit 12 umfasst hier das als Kolben ausgebildete Betätigungselement 14, welches in dem Betätigungselementgehäuse 17 linear und somit geradlinig verschiebbar angeordnet ist. An dem Betätigungselementgehäuse 17 ist eine Kopplung 21 angeordnet, die zur passgenauen und dichtenden Anbindung an die Öffnung 18 gestaltet ist. Darüber hinaus umfasst das Betätigungselementgehäuse 17 eine Austrittsöffnung 22. In Fig. 5 ist ein Betriebszustand der Unterdruckerzeugungseinheit 12 gezeigt, bei welcher der Kolben in Form des Betätigungselements 14 in einer ersten Endstellung angeordnet ist, die bei vollständig eingeschobener Schublade 10 im Aufnahmeraum 4 erreicht ist.

Es ist bei dieser Ausführung vorgesehen, dass das Betätigungselement 14 ortsfest in dem Aufnahmeraum 4 angeordnet ist und beispielsweise über ein Anbindungselement 23 an einer Wand des Innenbehälters 3 positionsfixiert ist. Andererseits ist insbesondere vorgesehen, dass das Betätigungselementgehäuse 17 in dem in der Nische 20 angeordneten Zustand positionsfixiert an der Schale 10 angeordnet ist. Die mögliche Relativbewegung zwischen dem Betätigungselement 14 und dem Betätigungselementgehäuse 17 ist in linearer Richtung insbesondere in Tiefenrichtung und somit in z-Richtung, in welcher sich auch nur die Schale 10 im Aufnahmeraum 4 bewegen kann. Durch diese Parallelität der Bewegungsmöglichkeiten wird erreicht, dass dann, wenn die Schale 10 mit dem bereits aufgebrachten und verschlossenen Deckel 9 in den Aufnahmeraum 4 in positiver z-Richtung eingeschoben wird, automatisch eine Relativbewegung auch zwischen dem Betätigungselementgehäuse 17 und dem feststehenden Betätigungselement 14 hervorgerufen wird. Dadurch wird dann automatisch durch die Pumpwirkung Luft aus dem Volumen des Frischhaltebehälters 8 aufgrund des Luftpumpenprinzips der Unterdruckerzeugungseinheit 12 abgesaugt, sodass bei dem Einschieben der Schale 10 und des Deckels 9 in den Aufnahmeraum 4 auch automatisch der reduzierte Luftdruck im Inneren dieses Moduls erzeugt wird.

Wird dann dieses Modul mit der Schale 10 und dem Deckel 9 aus dem Aufnahmeraum 4 wieder herausgezogen, so wird aufgrund der dann wiederum automatisch erfolgenden Relativbewegung zwischen dem Betätigungselementgehäuse 17 und dem Betätigungselement 14 Luft eingeblasen und somit der reduzierte Luftdruck in dem Frischhaltebehälter 8 wieder erhöht. Beim Erzeugen des reduzierten Luftdrucks wird dabei die abgesaugte Luft über die Öffnung 22 in dem Betätigungselementgehäuse 17 ausgeblasen, andererseits gemäß der Darstellung in Fig. 6 bei wiederum erfolgendem Einblasen von Luft in das Volumen des Frischhaltebehälters 8 die Luft von außen, insbesondere vom Aufnahmeraum 4, über die Öffnung 22 in die Unterdruckerzeugungseinheit 12 eingesaugt.

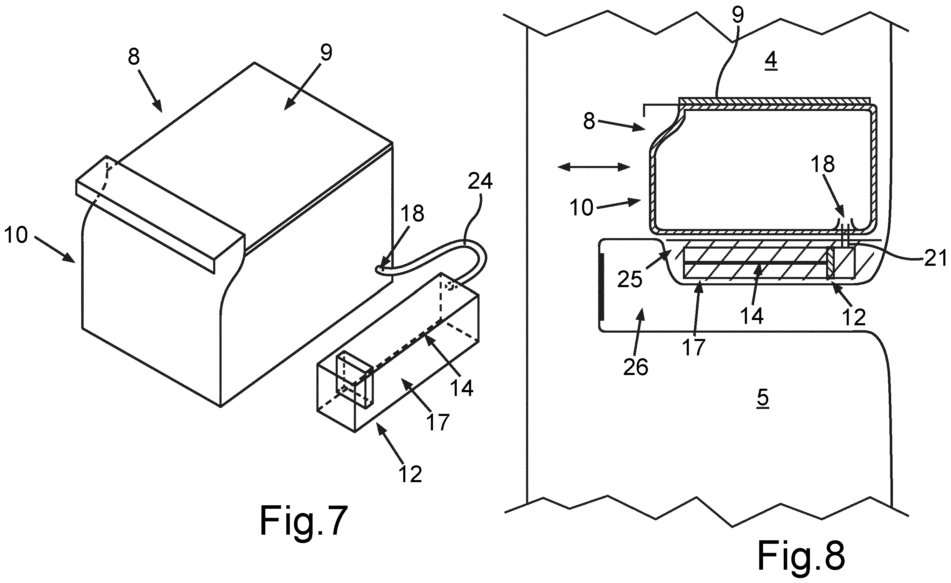

In Fig. 7 ist in einer weiteren perspektivischen Schnittdarstellung ein bezüglich der Position des Betätigungselementgehäuses von der Erfindung nicht umfasstes Ausführungsbeispiel des Frischhaltebehälters 8 gezeigt, bei welchem eine Unterdruckerzeugungseinheit 12 nicht direkt und unmittelbar anliegend an der Schale 10 und/oder dem Deckel 9 angeordnet ist, sondern beabstandet dazu angeordnet ist und über eine Luftleitung 24 eine strömungstechnische Kopplung mit der Öffnung 18 und somit auch dem Innenraumvolumen, welches durch die Schale 10 und den Deckel 9 begrenzt wird, erreicht.

In Fig. 8 ist in einer skizzenhaften Vertikalschnittdarstellung und somit in der y-z-Ebene ein weiteres, bezüglich der Position des Betätigungselementgehäuses von der Erfindung nicht umfasstes Ausführungsbeispiel eines Haushaltskältegeräts 1 gezeigt. Bei dieser Ausgestaltung ist in einer Vertiefung 25 in einer Trennwand 26, die den Aufnahmeraum 4 von dem Aufnahmeraum 5 separiert, eine Unterdruckerzeugungseinheit 12 ortsfest eingebettet angeordnet. Bei dieser Ausgestaltung wird bei einer Relativbewegung, beispielsweise bei einem Herausziehen der Schale 10 mit dem Deckel 9, eine Entkopplung von der Unterdruckerzeugungseinheit 12 generiert. In einer definierten Position wird dabei die Entkopplung vollzogen.

Andererseits wird beim Hineinschieben der Schale 10 mit dem Deckel 9 dann automatisch diese Kopplung wieder erzeugt. Insbesondere ist bei diesem Ausführungsbeispiel vorgesehen, dass kein automatisches Erzeugen des reduzierten Luftdrucks erfolgt, sondern dass wiederum ein Nutzer durch manuelle Betätigung der Unterdruckerzeugungseinheit 12, beispielsweise durch Verschieben des Betätigungselements 14 reduzierten Luftdruck erzeugt.

Ganz allgemein kann vorgesehen sein, dass eine Reduzierung des Luftdrucks im Inneren des Moduls umfassend die Schale 10 und den Deckel 9 durch Drücken oder Schieben oder Ziehen oder Drehen oder Rätschen des Betätigungselements 14 erfolgen kann.

Bevorzugt ist bei allen Ausführungen bis auf das Beispiel in Fig. 4 bis Fig. 6 vorgesehen, dass bei einer nutzerbetätigten Ausführung der Unterdruckerzeugungseinheit 12, bei welcher der Nutzer direkt das Betätigungselement 14 greift und bewegt, auch sehr nutzerindividuell der Wert des reduzierten Luftdrucks eingestellt werden kann. Je nachdem, wie weit der Nutzer das Betätigungselement 14 bewegt, wird somit mehr oder weniger der Luftdruck reduziert.

Es kann auch vorgesehen sein, dass Ausführungsbeispiele, wie sie erläutert wurden, kombiniert sind. Beispielsweise kann zusätzlich zu der Ausführung gemäß Fig. 4 bis Fig. 6 vorgesehen sein, dass der Nutzer dann zusätzlich auch noch durch direktes Greifen des Betätigungselements 14 eine weitere Reduzierung des Luftdrucks herbeiführt.

### Bezugszeichenliste

- 1: Haushaltskältegerät
- 2: Korpus
- 3: Innenbehälter
- 3a: vertikale Seitenwand
- 3b: vertikale Seitenwand
- 4: Aufnahmeraum
- 5: Aufnahmeraum
- 6: Tür
- 7: Gefrierraumtür
- 8: Frischhaltebehälter
- 9: Deckel
- 10: Schale
- 11: Abdeckung
- 12: Unterdruckerzeugungseinheit
- 13: Boden
- 14: Betätigungselement
- 15: Verschiebekulisse
- 16: Gehäuse
- 17: Betätigungselementgehäuse
- 18: Öffnung
- 19: vertikale Seitenwand
- 20: Nische
- 21: Kopplung
- 22: Austrittsöffnung
- 23: Anbindungselement
- 24: Luftleitung
- 25: Vertiefung
- 26: Trennwand

## Patentansprüche

1. Haushaltskältegerät (1) mit einem Aufnahmeraum (4, 5) für Lebensmittel, und mit einem in dem Aufnahmeraum (4, 5) angeordneten Frischhaltebehälter (8) für Lebensmittel, welcher eine Schale (10) und einen abdichtend auf der Schale (10) aufsetzbaren Deckel (9) aufweist, wobei der Frischhaltebehälter (8) eine mechanisch arbeitende Unterdruckerzeugungseinheit (12) aufweist, mit welcher in dem Frischhaltebehälter (8) ein gegenüber der Umgebung außerhalb des Frischhaltebehälters (8) reduzierter Luftdruck einstellbar ist, wobei die Unterdruckerzeugungseinheit (12) ein Betätigungselement (14) aufweist, welches relativ zum Frischhaltebehälter (8) bewegbar ist und wobei abhängig von der Bewegung des Betätigungselements (14) Luft aus dem Frischhaltebehälter (8) absaugbar ist, **dadurch gekennzeichnet, dass** die Schale (10) des Frischhaltebehälters (8) relativ zu dem Aufnahmeraum (4, 5) in dem Aufnahmeraum (4, 5) verschiebbar ist und die Unterdruckerzeugungseinheit (12) derart mit der Schale (10) gekoppelt ist, dass abhängig von der Bewegung der Schale (10) das Betätigungselement (14) der Unterdruckerzeugungseinheit (12) automatisch betätigt ist, und ein als Kolben ausgebildetes Betätigungselement (14) der Unterdruckerzeugungseinheit (12) ortsfest in dem Aufnahmeraum (4, 5) angeordnet ist und ein das Betätigungselement (14) aufnehmendes Betätigungselementgehäuse (17) der Unterdruckerzeugungseinheit (12) ortsfest mit der Schale (10) verbunden ist, wobei abhängig von der Bewegung der Schale (10) das Betätigungselementgehäuse (17) relativ zum Betätigungselement (14) verschiebbar ist und dadurch Luft aus dem Frischhaltebehälter (8) absaugbar ist.

2. Haushaltskältegerät (1)nach Anspruch 1, **dadurch gekennzeichnet, dass** die Unterdruckerzeugungseinheit (12) einen linear verschiebbaren Kolben als Betätigungselement (14) aufweist.

3. Haushaltskältegerät (1)nach Anspruch 1 oder 2, **dadurch gekennzeichnet, dass** die Unterdruckerzeugungseinheit (12) als mechanisch arbeitende Pumpe ausgebildet ist und ein als Kolben ausgebildetes Betätigungselement (14) aufweist, der in einem Betätigungselementgehäuse (17) verschiebbar gelagert ist, wobei abhängig von der Verschiebung des Kolbens Luft aus dem Frischhaltebehälter (8) absaugbar ist

4. Haushaltskältegerät (1) nach einem der vorhergehenden Ansprüche, **dadurch gekennzeichnet, dass** die Unterdruckerzeugungseinheit (12) in den Frischhaltebehälter (8) integriert ist.

5. Haushaltskältegerät (1) nach einem der Ansprüche 1 bis 3, **dadurch gekennzeichnet, dass** die Unterdruckerzeugungseinheit (12) von dem Frischhaltebehälter (8) zerstörungsfrei lösbar abnehmbar ist.

6. Haushaltskältegerät (1) nach einem der vorhergehenden Ansprüche, **dadurch gekennzeichnet, dass** die Unterdruckerzeugungseinheit (12) in einer Nische (20) des Frischhaltebehälters (8) aufgenommen ist, insbesondere bezüglich der Ausmaße des Frischhaltebehälters (8) überstandsfrei aufgenommen ist.

7. Haushaltskältegerät (1) nach einem der vorhergehenden Ansprüche, **dadurch gekennzeichnet, dass** die Unterdruckerzeugungseinheit (12) unterhalb der Schale (10) angeordnet ist.

8. Haushaltskältegerät (1) nach einem der vorhergehenden Ansprüche, **dadurch gekennzeichnet, dass** die Unterdruckerzeugungseinheit (12) seitlich neben einer Seitenwand (19) der Schale (10) angeordnet ist.

9. Haushaltskältegerät (1) nach einem der vorhergehenden Ansprüche, **dadurch gekennzeichnet, dass** die Unterdruckerzeugungseinheit (12) mit einer Luftleitung (24) mit einer Öffnung (18) in der Schale (10) verbunden ist.

10. Haushaltskältegerät (1) nach einem der vorhergehenden Ansprüche, **dadurch gekennzeichnet, dass** an der Schale (10) und/oder dem Deckel (9) eine Anzeigeeinheit (16) zur Anzeige des Luftdrucks in dem Frischhaltebehälter (8) ausgebildet ist.

11. Haushaltskältegerät (1 nach einem der vorhergehenden Ansprüche, **dadurch gekennzeichnet, dass** der Frischhaltebehälter (8) zerstörungsfrei entnehmbar in dem Aufnahmeraum (4, 5) angeordnet ist.

## Claims

1. Household refrigerator (1) with a receiving compartment (4, 5) for food, and with a freshness-preserving container (8) for food arranged in the receiving compartment (4, 5), which has a shell (10) and a cover (9) which can be placed on the shell (10) to form a seal, wherein the freshness-preserving container (8) has a mechanically operating low-pressure generating unit (12), with which an air pressure that is reduced compared to the surrounding area outside of the freshness preserving container (8) can be adjusted in the freshness-preserving container (8), wherein the low-pressure generating unit (12) has an actuation element (14), which can be moved relative to the freshness-preserving container (8) and wherein air can be suctioned out of the freshness-preserving container (8) as a function of the movement of the actuation element (14), **characterised in that** the shell (10) of the freshness-preserving container (8) can be displaced relative to the receiving compartment (4, 5) in the receiving compartment (4, 5) and the low-pressure generating unit (12) is coupled to the shell (10) such that as a function of the movement of the shell (10) the actuation element (14) of the low-pressure generating unit (12) is automatically actuated, and an actuation element (14), embodied as a piston, of the low-pressure-generating unit (12) is arranged in a fixed position in the receiving compartment (4, 5) and an actuation element housing (17) of the low-pressure-generating unit (12) which receives the actuation element (14) is connected in a fixed position with the shell (10), wherein the actuation element housing (17) can be displaced relative to the actuation element (14) as a function of the movement of the shell (10) and as a result air can be suctioned from the freshness-preserving container (8).

2. Household refrigerator (1) according to claim 1, **characterised in that** the low-pressure generating unit (12) has a linearly displaceable piston as an actuation element (14).

3. Household refrigerator (1) according to claim 1 or 2, **characterised in that** the low-pressure generating unit (12) is embodied as a mechanically operating pump and has an actuation element (14) embodied as a piston, which is moveably mounted in an actuation element housing (17), wherein air can be suctioned out of the freshness-preserving container (8) as a function of the displacement of the piston.

4. Household refrigerator (1) according to one of the preceding claims, **characterised in that** the low-pressure generating unit (12) is integrated into the freshness-preserving container (8).

5. Household refrigerator (1) according to one of claims 1 to 3, **characterised in that** the low-pressure generating unit (12) can be detachably removed from the freshness-preserving container (8) in a non-destructive manner.

6. Household refrigerator (1) according to one of the preceding claims, **characterised in that** the low-pressure-generating unit (12) is received in a recess (20) of the freshness-preserving container (8), in particular received in a projection-free manner in respect of the dimensions of the freshness-preserving container (8).

7. Household refrigerator (1) according to one of the preceding claims, **characterised in that** the low-pressure generating unit (12) is arranged below the shell (10).

8. Household refrigerator (1) according to one of the preceding claims, **characterised in that** the low-pressure generating unit (12) is arranged laterally adjacent to a side wall (19) of the shell (10).

9. Household refrigerator (1) according to one of the preceding claims, **characterised in that** the low-pressure generating unit (12) is connected with an air pipe (24) to an opening (18) in the shell (10).

10. Household refrigerator (1) according to one of the preceding claims, **characterised in that** a display unit (16) for displaying the air pressure in the freshness-preserving container (8) is embodied on the shell (10) and/or the cover (9).

11. Household refrigerator (1) according to one of the preceding claims, **characterised in that** the freshness-preserving container (8) is arranged so as to be removable in a non-destructive manner in the receiving compartment (4, 5).

## Revendications

1. Appareil frigorifique ménager (1) avec un espace d'accueil (4, 5) pour denrées alimentaires, et avec un contenant fraîcheur (8) pour denrées alimentaires disposé dans l'espace d'accueil (4, 5), lequel présente un bac (10) et un couvercle (9) pouvant être posé de façon étanche sur le bac (10), dans lequel le contenant fraîcheur (8) présente une unité de génération de dépression (12) à fonctionnement mécanique, laquelle permet de régler dans le contenant fraîcheur (8) une pression d'air réduite par rapport à l'environnement en dehors du contenant fraîcheur (8), dans lequel l'unité de génération de dépression (12) présente un élément d'actionnement (14) déplaçable par rapport au contenant fraîcheur (8) et dans lequel de l'air peut être extrait par aspiration du contenant fraîcheur (8) en fonction du déplacement de l'élément d'actionnement (14), **caractérisé en ce que** le bac (10) du contenant fraîcheur (8) est déplaçable par rapport à l'espace d'accueil (4, 5) dans l'espace d'accueil (4, 5) et l'unité de génération de dépression (12) est couplée de telle façon au bac (10) que l'élément d'actionnement (14) de l'unité de génération de dépression (12) est automatiquement actionné selon le déplacement du bac (10), et un élément d'actionnement (14) exécuté sous la forme d'un piston de l'unité de génération de dépression (12) est disposé de manière fixe dans l'espace d'accueil (4, 5) et un carter d'élément d'actionnement (17) de l'unité de génération de dépression (12) accueillant l'élément d'actionnement (14) est relié de manière fixe au bac (10), dans lequel le carter d'élément d'actionnement (17) est déplaçable par rapport à l'élément d'actionnement (14) et de l'air peut être extrait par aspiration du contenant fraîcheur (8) en fonction du déplacement du bac (10).

2. Appareil frigorifique ménager (1) selon la revendication 1, **caractérisé en ce que** l'unité de génération de dépression (12) présente un piston déplaçable linéairement comme élément d'actionnement (14).

3. Appareil frigorifique ménager (1) selon la revendication 1 ou 2, **caractérisé en ce que** l'unité de génération de dépression (12) est exécuté sous la forme d'une pompe fonctionnant mécaniquement et présente un élément d'actionnement (14) exécuté sous forme de piston, logé de façon déplaçable dans un carter d'élément d'actionnement (17), dans lequel de l'air peut-être extrait par aspiration du contenant fraîcheur (8) en fonction du déplacement du piston.

4. Appareil frigorifique ménager (1) selon l'une des revendications précédentes, **caractérisé en ce que** l'unité de génération de dépression (12) est intégrée au contenant fraîcheur (8).

5. Appareil frigorifique ménager (1) selon l'une des revendications 1 à 3, **caractérisé en ce que** l'unité de génération de dépression (12) est amovible sans destruction du contenant fraîcheur (8).

6. Appareil frigorifique ménager (1) selon l'une des revendications précédentes, **caractérisé en ce que** l'unité de génération de dépression (12) est intégrée à une niche (20) du contenant fraîcheur (8), en particulier intégrée sans saillie concernant la dimension du contenant fraîcheur (8).

7. Appareil frigorifique ménager (1) selon l'une des revendications précédentes, **caractérisé en ce que** l'unité de génération de dépression (12) est disposée sous le bac (10).

8. Appareil frigorifique ménager (1) selon l'une des revendications précédentes, **caractérisé en ce que** l'unité de génération de dépression (12) est disposée latéralement à côté d'une paroi latérale (19) du bac (10).

9. Appareil frigorifique ménager (1) selon l'une des revendications précédentes, **caractérisé en ce que** l'unité de génération de dépression (12) est reliée à un tuyau d'air (24) avec un orifice (18) dans le bac (10).

10. Appareil frigorifique ménager (1) selon l'une des revendications précédentes, **caractérisé en ce qu'**une unité d'affichage (16) pour l'affichage de la pression d'air dans le contenant fraîcheur (8) est exécutée sur le bac (10) et/ou le couvercle (9).

11. Appareil frigorifique ménager (1) selon l'une des revendications précédentes, **caractérisé en ce que** le contenant fraîcheur (8) est disposé de façon amovible sans destruction dans l'espace d'accueil (4, 5).
